# EUROPEAN PATENT SPECIFICATION

(11) **EP 3 050 334 B1**
(45) Date of publication and mention of the grant of the patent: **13.11.2019**
(21) Application number: 13770880.6
(22) Date of filing: 25.09.2013
(51) Int. Cl.: H04W 8/20, H04W 8/02

(54) **MANAGING ROAMING INFORMATION IN COMMUNICATIONS**
VERWALTUNG VON ROAMING-INFORMATIONEN IN DER KOMMUNIKATION
GESTION D'INFORMATIONS D'ITINÉRANCE DANS DES COMMUNICATIONS

(43) Date of publication of application: 03.08.2016
(73) Proprietor: Nokia Solutions and Networks Oy, 02610 Espoo (FI)
(72) Inventor: DIAS, Pedro Luis, P-2610-042 Amadora (PT)
(74) Representative: Nokia EPO representatives
(86) International application number: PCT/EP2013/069955
(87) International publication number: WO 2015/043627

(56) References cited:
- WO-A1-01/63532
- WO-A1-2010/020246
- US-A1- 2007 112 948
- US-B1- 6 915 345

## Description

### FIELD OF THE INVENTION

The exemplary and non-limiting embodiments of this invention relate generally to wireless communications networks, and more particularly to managing roaming information.

### BACKGROUND ART

The following description of background art may include insights, discoveries, understandings or disclosures, or associations together with dis-closures not known to the relevant art prior to the present invention but provided by the invention. Some such contributions of the invention may be specifically pointed out below, whereas other such contributions of the invention will be apparent from their context.

Mobile network operators have roaming agreements and capabilities in place to ensure that their customers are able to attach other mobile operator networks when moving out of the radio coverage of their home network.

Prior art document WO 2010/020246 A1 shows a method of analysing data traffic in at least one telecommunication network, said method comprising the steps of: achieving a plurality of call detail records related to said data traffic in said at least one telecommunication network, aggregating the plurality of call detail records into a call detail record representation comprising at least one pre-search results and storing said call detail record representation in a database, and performing an analysis of said data traffic by means of a query in said call detail record representation.

### SUMMARY

The following presents a simplified summary of the invention in order to provide a basic understanding of some aspects of the invention. This summary is not an extensive overview of the invention. It is not intended to identify key/critical elements of the invention or to delineate the scope of the invention. Its sole purpose is to present some concepts of the invention in a simplified form as a prelude to the more detailed description that is presented later. Various aspects of the invention comprise methods, an apparatus, and a computer program product as defined in the independent claims. Further embodiments of the invention are disclosed in the dependent claims.

An aspect of the invention relates to a method comprising receiving, in a first network apparatus from a data collection function, data related to a network transaction; filtering the received data to obtain roaming data; regarding the obtained roaming data, identifying a peer network operator in the corresponding network transaction; forwarding the obtained roaming data to a respective second network apparatus managed by the identified peer network operator, wherein the first network apparatus is managed by a network operator different from the identified peer network operator.

A further aspect of the invention relates to a method comprising receiving, in a second network apparatus roaming data from a first network apparatus, wherein the roaming data is related to a network transaction, wherein the network operator managing the second network apparatus is identified by the first network apparatus as a peer network operator in the network transaction, the peer network operator being a home network operator or a visited network operator, wherein the first network apparatus is managed by a network operator different from the identified peer network operator; and providing the received roaming data to a customer experience management function.

A still further aspect of the invention relates to an apparatus comprising at least one processor; and at least one memory including a computer program code, wherein the at least one memory and the computer program code are configured to, with the at least one processor, cause the apparatus to perform any of the method steps.

A still further aspect of the invention relates to a computer program product comprising program instructions which, when run on a computing apparatus, causes the computing apparatus to perform any of the method steps.

Although the various aspects, embodiments and features of the invention are recited independently, it should be appreciated that all combinations of the various aspects, embodiments and features of the invention are possible and within the scope of the present invention as claimed.

### BRIEF DESCRIPTION OF THE DRAWINGS

In the following the invention will be described in greater detail by means of exemplary embodiments with reference to the attached drawings, in which
Figure 1 shows a simplified block diagram illustrating exemplary system architecture;
Figure 2 shows a simplified block diagram illustrating an exemplary apparatus;
Figure 3 shows a messaging diagram illustrating an exemplary messaging event according to an embodiment of the invention;
Figure 4 shows a schematic diagram of a flow chart according to an exemplary embodiment of the invention;
Figure 5 shows a schematic diagram of a flow chart according to an exemplary embodiment of the invention.

### DETAILED DESCRIPTION OF SOME EMBODIMENTS

A home network is an infrastructure that knows customer subscriptions, accepting attachment requests of the customer and is able to charge for the services the customer uses based on a commercial contractual relationship that associates the customers only to their home operators. When moving out of the radio coverage of the home network, if there does exist a roaming agreement with another mobile operator in reach of a device, it is also possible for this device/customer/user to attach and have access to mobile network services using this other operator network (a visited mobile network). These users are so called roamers, and, as for any other customers of mobile network services, many metrics aiming to problems detection or quality of service assessments are gathered and processed across the network infrastructure. In the specific case of roamers, the network infrastructure used includes an infrastructure of the home operator, an infrastructure of the visited operator, and often also an infrastructure of one or more communication service providers ensuring an interconnection between the operators.

Provision of roaming services is such that every operator involved in the service gathers information of interest to other operators. Thus, an efficient distribution of such information across the operators involved, one that takes into account constraints of moving sensitive data across country borders and across companies, is of interest to each party involved in the roaming service.

In the current case of roaming services, several key metrics that are of interest to each involved operator (fundamentally home and visited operators) may only be collected by one of them, either the visited operator or the home operator, whichever happens to manage the infrastructure responsible for that specific measurement. Everyone has something to gain with this information exchange but there is currently no efficient way of realizing it and thus no operator fully benefits from this exchange.

In more detail, there are faults or incidents in the roaming service provisioning such that their detection relies on metrics collected by one operator, whereas the diagnosis, resolution or improvement of which requires actions of the other operator. When only the correlation between metrics collected in both operators enables the recognition of a problematic pattern, this makes it currently very unlikely that such a detection ever takes place, since no operator by its own detects the problem, and without any detection, no inter-operator information exchange is even initiated according to usual processes.

Additionally, once the information that needs to be exchanged may include at an original data source corporate confidential details and customer sensitive information that cannot be sent across borders or across companies, it is often needed some sophisticated data mediation techniques to filter or encrypt sensitive data before sending it to the peer organization of the other operator. As a result, the detection of roaming service problems or simple usage assessments requiring correlation between distinct operators information may represent a significant effort in terms of human-labour for each operator involved, and a significant challenge to the processes of the organization.

The mobile network operator may easily manage more than one hundred roaming agreements reaching operators across the world. This fact alone makes it a real practical challenge, just the establishment and maintenance of productive dialogues for information exchanges across these companies (that on top may be competitors) based in distinct countries, with distinct native languages and cultures, and which organizations rely on totally different tools and processes.

Currently, to ensure the quality of the roaming service, a large amount of human-labour from each party involved is required. The parties involved are usually the visited operator and the home operator, and each interchangeably plays a role of the operator provider of the metric, the operator consumer of the metric, and the operator applying the improvement action. Each party needs to be an active party, on a case by case basis, in order to realize those roaming service improvements that require exchange of information for detection, diagnosis and correction. Most of the above mentioned human-labour is consumed in inter-operator dialogues according to a request and reply pattern in which both the requesting party and the replier are to be active human actors of an often complex process.

As a result from this request-reply pattern, many roaming service issues requiring complex correlations or other kind of information exchange patterns, just for the detection part of the process, remain undetected and necessarily unsolved. This also happens in those cases where the holder of the knowledge needed to detect a problem is not the holder of the metric that unveils it and needs to be proactive in requesting the metric from an external party without prior information that a problem does in fact exist. Once the establishment and maintenance of several communication channels towards external organizations in foreign countries represents by itself a difficult challenge, then often these information exchanges do not take place, unless the severity of the problem reaches a critical level.

Current processes applied by the operators in the management of the quality of roaming services do not incorporate proactive analysis of network data measured by others; so in most cases they merely act reactively to customer complaints.

An exemplary embodiment discloses a mutually accessible, near-real time roaming service usage metrics measured by one operator, but which also concerns another operator because this other operator (home or visited) is also an active contributor to the full realization of the service.

An exemplary embodiment discloses an apparatus realizing a secure, bidirectional interface between mobile network operators so that service usage metrics collected by the network infrastructure and concerning roamers alone are able to flow between the home operator and the visited operator. According to an exemplary embodiment, the service usage metrics may be exchanged automatically, being available in near-real-time to the other operator. The information flowing on this interface is encrypted and stripped out of any confidential information that is not sharable between the involved mobile operator companies. The apparatus realizing this interface may encrypt/unencrypt, mask, filter, compress/uncompress, and use content awareness to route the information just across the operators involved in each roaming scenario. For example, metrics collected at a visited operator and concerning roamers coming from one specific home operator, only flows towards that home operator. The selection of the metrics that is distributed between the operators is flexible, meaning that the interface supports requests for new metrics. It also is flexible enough to adapt to a mutually agreed set of metrics to be distributed automatically in a near real-time manner.

In an exemplary embodiment, it is assumed that at each mobile network operator, there is a generally defined customer experience management (CEM) system able to store the information distributed through the apparatus disclosed, and furthermore, this CEM system provides the capabilities needed to enable the operators to access and process meanwhile stored information which concerns service usage metrics from the roamers.

In an exemplary embodiment, it is also assumed that at each mobile network operator, there is an apparatus (hereafter called a data collection (DC) function) collecting and distributing service usage metrics from the network infrastructure; it may be a system based on interface probes or a common operations support system (OSS), or network elements themselves in case they have the capability of collecting and exporting the needed metrics.

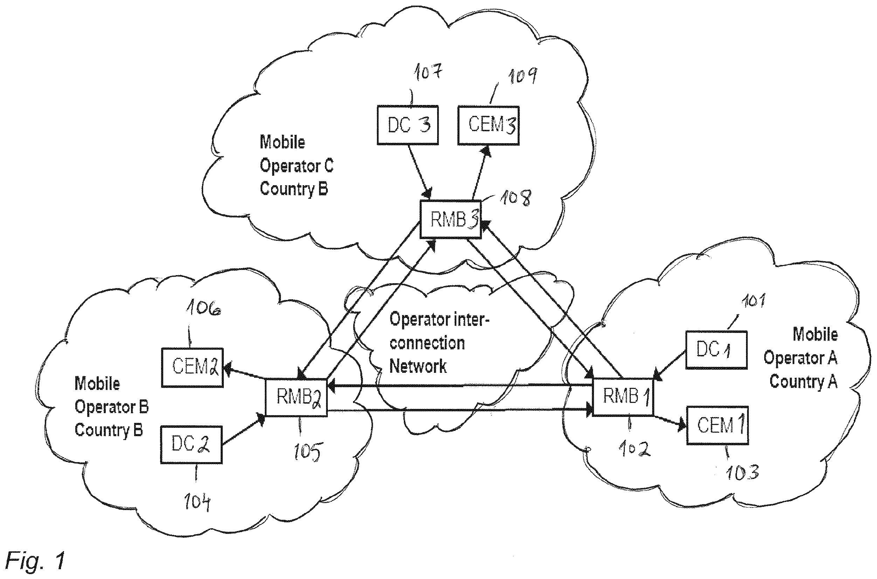

Figure 1 is a context view for interworking between an exemplary apparatus and external systems in a national or international multi-operator environment.

In an exemplary embodiment, a hereafter called roaming measurements broker (RMB) function may be implemented as a software product and may run on top of a common, off-the-shelf server platform. That platform receives data from the data collection functions via SFTP or FTP, or via some lower level streaming protocol, such as TCP. Then the roaming measurements broker (RMB) inspects the received data to filter out the non-roaming data and, regarding the roaming data, it identifies the peer operator in every transaction in order to know where to forward the data. The peer operator is either the home operator or the visited operator depending on the roaming scenario, outbound roaming or inbound roaming, and on the transaction from where the data is collected. Information related to the same peer operator is grouped and forwarded to a single destination (again via SFTP or TCP streaming); that destination is a remote RMB (managed by some other operator) that is able to collect the data and act as a mediator to make it available to whatever CEM system this other operator uses, in order to store and visualize the data. Before distributing the data to the different operators, RMB undertakes common mediation functions to apply security policies, filter and compress the data so that it may be safely and lawfully forwarded to different operators in different countries.

An exemplary embodiment makes mutually accessible, in near-real time, the roaming service usage metrics measured by one operator (visited or home) and concerning also some other operator that also plays an active role in the realization of the service (home if the former is the visited, or visited if the former is the home). An exemplary embodiment represents a significant enhancement compared to existing labour-intensive, complex, and mostly manual processes.

Thus the roaming service usage metrics measured by each operator (home and visited) may become mutually accessible by other operators in a near-real time manner. An exemplary embodiment provides an enabler for a countless number of more specific use-cases that take advantage from this information and could not be realized without it. Examples of such use cases may include:
- roamer steering efficiency assessment and detection of steering and/or anti-steering practices by the competition (in some countries steering may be an illegal practice and anti-steering is a practice that goes against GSMA agreements);
- for each foreign operator, assessing a market share based on roamers attachments at a country level; in detail, this means for a hypothetical operator A that operates in its country against competitors B and C, to quantify the amount of customers from a foreign operator F that, when travelling to operator A country, attached to operator A, compared to how many attached to operator B and how many attached to operator C;
- troubleshooting roamers latch failures, for instance, in pursue of provisioning errors in the roaming service;
- near real-time detection of operator interworking problems that may have as a root cause technical non-compliance with the roaming agreements in place, and in such cases it is quite useful to correlate information from both operators.

Thus an exemplary embodiment enables providing real or near real-time monitoring capabilities for the mobile network customers while they are roaming in another network, and includes a collection function at the visited network.

In an exemplary embodiment, RMB may be configured to apply a security policy by using methods for encryption, filtering or masking, before making the data available for distribution.

In an exemplary embodiment, a bidirectional data exchange may be assumed between a home network operator and a visited network operator, i.e. the data flows from the visited to the home operator, but it may also flow from the home operator to the visited operator. Thus, a term peer operator may be used in the context meaning that either the home or the visited operator may be the destination for the data, depending on the roaming scenario, inbound roaming or outbound roaming, and on the transaction from where the data is collected (e.g. the home operator may monitor some transactions from its own subscribers while they visit other countries; for example, transactions such as an initial attachment require the involvement of the home operator; the home operator may therefore share with the visited operators selected data concerning such transactions).

Exemplary embodiments will now be described more fully hereinafter with reference to the accompanying drawings, in which some, but not all embodiments of the invention are shown. Indeed, the invention may be embodied in many different forms and should not be construed as limited to the embodiments set forth herein; rather, these embodiments are provided so that this disclosure will satisfy applicable legal requirements. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments. Like reference numerals refer to like elements throughout.

The present invention is applicable to any user terminal, network node, server, corresponding component, and/or to any communication system or any combination of different communication systems that support a roaming functionality. The communication system may be a fixed communication system or a wireless communication system or a communication system utilizing both fixed networks and wireless networks. The protocols used, the specifications of communication systems, servers and user terminals, especially in wireless communication, develop rapidly. Such development may require extra changes to an embodiment. Therefore, all words and expressions should be interpreted broadly and they are intended to illustrate, not to restrict, the embodiment.

In the following, different embodiments will be described using, as an example of a system architecture whereto the embodiments may be applied, an architecture based on LTE (or LTE-A) (long term evolution (advanced long term evolution)) network elements, without restricting the embodiment to such an architecture, however. The embodiments described in these examples are not limited to the LTE radio systems but can also be implemented in other radio systems, such as 3G, 4G, 5G, B4G, UMTS (universal mobile telecommunications system), GSM, EDGE, WCDMA, bluetooth network, WLAN, WiMAX or other fixed, mobile or wireless network. In an embodiment, the presented solution may be applied between elements belonging to different but compatible systems such as LTE and UMTS.

A general architecture of a communication system is illustrated in Figure 1. Figure 1 is a simplified system architecture only showing some elements and functional entities, all being logical units whose implementation may differ from what is shown. The connections shown in Figure 1 are logical connections; the actual physical connections may be different. It is apparent to a person skilled in the art that the systems also comprise other functions and structures. It should be appreciated that the functions, structures, elements and the protocols used in or for network roaming, are irrelevant to the actual invention. Therefore, they need not to be discussed in more detail here.

The exemplary radio system of Figure 1 comprises a network node 101 of a network operator A. The network node 101 may include an apparatus for collecting and distributing service user metrics, e.g. a data collection function DC1, or any other network element, or a combination of network elements. The network node 101 may be connected to a server platform 102 implementing a roaming measurements broker RMB1 function. In the example situation of Figure 1, the server platform RMB1 102 is capable of connecting to a customer experience management system 103 CEM1. In the example situation of Figure 1, the apparatuses DC1 101, RMB1 102 and CEM1 103 are located in a mobile network operated by the operator A in a country A.

The exemplary radio system of Figure 1 further comprises a network node 104 of a network operator B. The network node 104 may include an apparatus for collecting and distributing service user metrics, e.g. a data collection function DC2, or any other network element, or a combination of network elements. The network node 104 may be connected to a server platform 105 implementing a roaming measurements broker RMB2 function. In the example situation of Figure 1, the server platform RMB2 105 is capable of connecting to a customer experience management system 106 CEM2. In the example situation of Figure 1, the apparatuses DC2 104, RMB2 105 and CEM2 106 are located in a mobile network operated by the operator B in a country B.

The exemplary radio system of Figure 1 further comprises a network node 107 of a network operator C. The network node 107 may include an apparatus for collecting and distributing service user metrics, e.g. a data collection function DC3, or any other network element, or a combination of network elements. The network node 107 may be connected to a server platform 108 implementing a roaming measurements broker RMB3 function. In the example situation of Figure 1, the server platform RMB3 108 is capable of connecting to a customer experience management system 109 CEM3. In the example situation of Figure 1, the apparatuses DC3 107, RMB3 108 and CEM3 109 are located in a mobile network operated by the operator C in a country B. In the exemplary radio system of Figure 1 the server platforms RMB1 102, RMB2 105 and RMB3 108 are capable of connecting to each other via an operator interconnecting network.

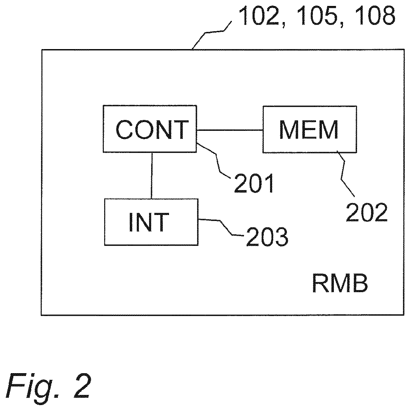

Figure 2 is a block diagram of an apparatus according to an embodiment of the invention. Figure 2 shows a server platform 102, 105, 108 implementing a roaming measurements broker RMB function. The apparatus or RMB 102, 105, 108 comprises a controller 201 operationally connected to a memory 202 and an interface 203. The controller 201 controls the apparatus or RMB 102, 105, 108. The memory 202 is configured to store software and data. The network node RMB 102, 105, 108 may also comprise various other components. They are not displayed in the figure due to simplicity. The network node RMB 102, 105, 108 may be operationally connected (directly or indirectly) to another network element (not shown in Figure 2) of the communication system, such as a roaming measurements broker RMB function RMB 102, 105, 108 of another network operator, or any other network element, or a combination of network elements, via the interface 203. The embodiments are not, however, restricted to the network given above as an example, but a person skilled in the art may apply the solution to other communication networks provided with the necessary properties.

Although the apparatus RMB 102, 105, 108 has been depicted as one entity, different modules and memory may be implemented in one or more physical or logical entities. The apparatus may be a server platform implementing a roaming measurements broker RMB function, a data collection (DC) function, a customer experience management (CEM) system, a gateway GPRS support node (GGSN), a SAE gateway (SAE-GW), an EPC network element, a PDN gateway (PGW), an operation and maintenance centre (O&M unit, O&M), a switch, a radio network controller (RNC), a mobility management entity (MME), an MSC server (MSS), a mobile switching centre (MSC), a radio resource management (RRM) node, an operations, administrations and maintenance (OAM) node, a home location register (HLR), a visitor location register (VLR), a serving GPRS support node, a base station, an access point, a gateway, and/or a server. The apparatus may also be a user terminal which is a piece of equipment or a device that associates, or is arranged to associate, the user terminal and its user with a subscription and allows a user to interact with a communications system. The user terminal presents information to the user and allows the user to input information. In other words, the user terminal may be any terminal capable of receiving information from and/or transmitting information to the network, connectable to the network wirelessly or via a fixed connection. Examples of the user terminals include a personal computer, a game console, a laptop (a notebook), a personal digital assistant, a mobile station (mobile phone), a smart phone, a tablet, and a line telephone.

The apparatus 102, 105, 108 may generally include a processor, controller, control unit or the like connected to a memory and to various inter-faces of the apparatus. Generally the processor is a central processing unit, but the processor may be an additional operation processor. The processor may comprise a computer processor, application-specific integrated circuit (ASIC), field-programmable gate array (FPGA), and/or other hardware components that have been programmed in such a way to carry out one or more functions of an embodiment.

The memory 202 may include volatile and/or non-volatile memory and typically stores content, data, or the like. For example, the memory 202 may store computer program code such as software applications or operating systems, information, data, content, or the like for a processor to perform steps associated with operation of the apparatus 102, 105, 108 in accordance with embodiments. The memory may be, for example, random access memory (RAM), a hard drive, or other fixed data memory or storage device. Further, the memory, or part of it, may be removable memory detachably connected to the apparatus.

The techniques described herein may be implemented by various means so that an apparatus implementing one or more functions of a corresponding mobile entity described with an embodiment comprises not only prior art means, but also means for implementing the one or more functions of a corresponding apparatus described with an embodiment and it may comprise separate means for each separate function, or means may be configured to perform two or more functions. For example, these techniques may be implemented in hardware (one or more apparatuses), firmware (one or more apparatuses), software (one or more modules), or combinations thereof. For a firmware or software, implementation can be through modules (e.g. procedures, functions, and so on) that perform the functions described herein. The software codes may be stored in any suitable, processor/computer-readable data storage medium(s) or memory unit(s) or article(s) of manufacture and executed by one or more processors/computers. The data storage medium or the memory unit may be implemented within the processor/computer or external to the processor/computer, in which case it can be communicatively coupled to the processor/computer via various means as is known in the art.

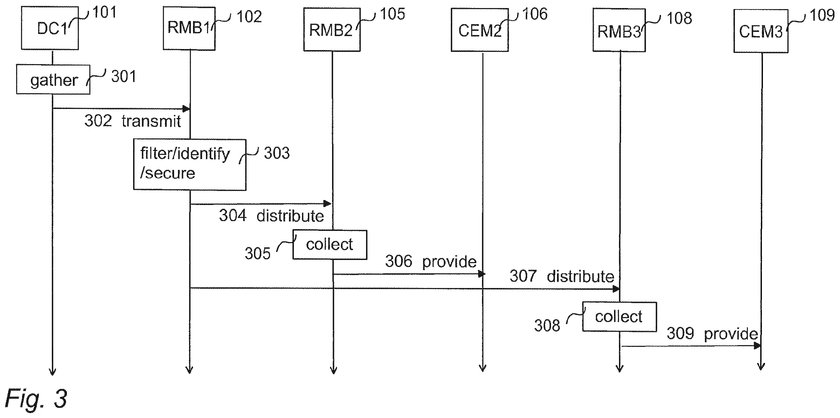

The signalling chart of Figure 3 illustrates the required signalling. In the example of Figure 3, a core network node 101, e.g. a network element DC1 (such as a data collection function located in a mobile operator A's network in a country A), may be configured to gather 301 data related to network transactions. In item 302, the first DC1 101 may be configured to transmit the gathered data related to network transactions to a core network node 102, e.g. a network apparatus (such as a server platform 102 implementing a roaming measurements broker RMB1 function located in the mobile operator A's network in the country A). In item 303, the network apparatus RMB1 102 may be configured to receive from the data collection function 101 the data related to network transactions. Further, in item 303, the network apparatus RMB1 102 may be configured to filter the received data to obtain roaming data, and, regarding the obtained roaming data, identify a peer network operator involved in the corresponding network transaction. The peer network operator may be either a home operator or a visited operator depending on the roaming scenario, outbound roaming or inbound roaming, and on the transaction from where the data is collected. Furthermore, in item 303, the network apparatus RMB1 102 may be configured to apply a security policy by using methods for encryption, filtering or masking, before making the data available for distribution. In item 304, 307, the network apparatus RMB1 102 may be configured to forward (i.e. distribute) the obtained roaming data to a respective further network apparatus RMB2 105, RMB3 108 managed by the identified peer network operator, wherein the network apparatus RMB1 102 is managed by a network operator different from the identified network operator (home or visited). In item 305, 308, the further network apparatus RMB2 105, RMB3 108 may be configured to receive and collect the roaming data transmitted by the apparatus 102 and related to the network transaction. In item 306, 309, the further network apparatus RMB2 105, RMB3 108 may be configured to provide the received roaming data to a respective customer experience management function CEM2 106, CEM3 109.

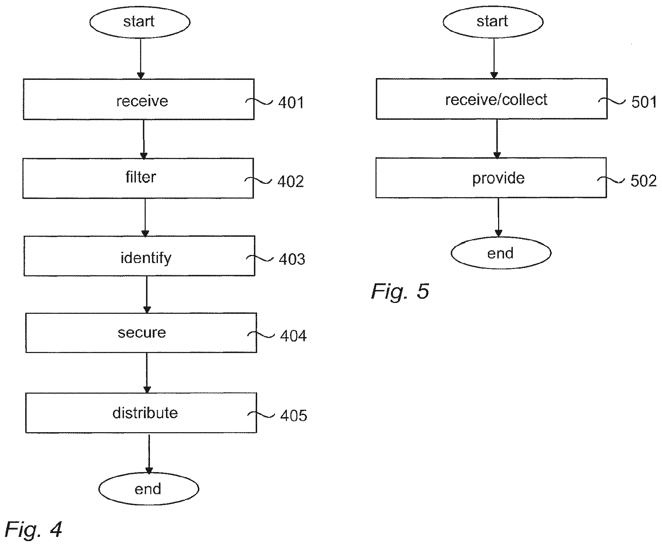

Figure 4 is a flow chart illustrating an exemplary embodiment. An apparatus 102, e.g. a core network node 102 (such as a server platform 102 implementing a roaming measurements broker RMB1 function located in the mobile operator A's network in the country A) may be configured to receive 401 from a network node 101, e.g. a network element DC1 (such as a data collection function located in a mobile operator A's network in a country A), data related to a network transaction. In item 402, the network apparatus RMB1 102 may be configured to filter the received data to obtain roaming data, and, in item 403, regarding the obtained roaming data, identify a peer network operator (home or visited) in the corresponding network transaction. In item 404, the network apparatus RMB1 102 may be configured to secure the data by using methods for encryption, masking or filtering in order to comply with applicable legal or corporate policies protecting confidential data. In item 405, the network apparatus RMB1 102 may be configured to forward (i.e. distribute) the obtained roaming data to a respective further network apparatus RMB2 105, RMB3 108 managed by the identified peer network operator (home or visited), wherein the network apparatus RMB1 102 is managed by a network operator different from the identified peer network operator.

Figure 5 is a flow chart illustrating an exemplary embodiment. An apparatus 105, 108, e.g. a core network node 105, 108 (such as a server platform 105, 108 implementing a roaming measurements broker RMB2, RMB3 function located in the mobile operator B's, C's network in the country B, respectively) may be configured to receive 501 roaming data related to a network transaction, from a network node 102, e.g. a core network node 102 (such as a server platform 102 implementing a roaming measurements broker RMB1 function located in the mobile operator A's network in the country A). In item 502, the apparatus RMB2 105, RMB3 108 may be configured to provide the received roaming data to a respective customer experience management function CEM2 106, CEM3 109 for an analysis.

Each operator involved in a roaming service may gather information which may be of interest to the other operators. An exemplary embodiment enables an efficient distribution of the information across the network operators involved. An exemplary embodiment enables taking into account the constraints of moving sensitive data across country borders and across companies. In an exemplary embodiment, one operator measures roaming service usage metrics (i.e. gathers roaming-related information). This measured roaming service usage metrics may also concern another operator, because this other operator (home or visited) may also be an active contributor to the full realization of the service. Thus the gathered information may be made mutually accessible, in near-real time, between the operators.

The steps/points, signalling messages and related functions de-scribed above in Figures 1 to 5 are in no absolute chronological order, and some of the steps/points may be performed simultaneously or in an order differing from the given one. Other functions can also be executed between the steps/points or within the steps/points and other signalling messages sent be-tween the illustrated messages. Some of the steps/points or part of the steps/points can also be left out or replaced by a corresponding step/point or part of the step/point. The apparatus operations illustrate a procedure that may be implemented in one or more physical or logical entities. The signalling messages are only exemplary and may even comprise several separate messages for transmitting the same information. In addition, the messages may also contain other information.

It will be obvious to a person skilled in the art that, as the technology advances, the inventive concept can be implemented in various ways. The invention and its embodiments are not limited to the examples described above but may vary within the scope of the claims.

### List of abbreviations

- CEM: customer experience management
- DC: data collection
- OSS: operations support system
- RMB: roaming measurements broker
- RTB: real time broker

## Claims

1. A method for managing roaming information in a communications system, the method comprising
receiving (303, 401), in a first network apparatus (102) from a data collection function, data related to a network transaction;
filtering (303, 402) the received data to obtain roaming data;
regarding the obtained roaming data, identifying (303, 403) a peer network operator in the corresponding network transaction;
forwarding (304, 405) the obtained roaming data to a respective second network apparatus (105, 108) managed by the identified peer network operator, wherein the first network apparatus (102) is managed by a network operator different from the identified peer network operator;
wherein the method comprises using roaming data content awareness to route the roaming data to the network operators involved in a roaming scenario; and
wherein the peer network operator relates to a home network or to a visited network.

2. A method according to claim 1, wherein the method comprises providing near-real-time exchange of roaming data between network operators.

3. A method according to claim 1 or 2, wherein the method comprises filtering out (303, 402) confidential information that is not to be shared with the identified peer network operator, before forwarding (304, 405) the roaming data to the second network apparatus (105, 108).

4. A method according to claim 1, 2 or 3, wherein the method comprises providing, in the first network apparatus (102), an interface for encrypting, decrypting, masking, filtering, compressing and/or decompressing the roaming data before forwarding (304, 405) the roaming data to the second network apparatus (105, 108).

5. A method according to any of claims 1 to 4, wherein the method comprises mutually, between network operators, agreeing a set of roaming metrics to be distributed automatically in near real-time.

6. A method according to any of claims 1 to 5, wherein a roaming measurements broker function is running on top of a common off-the-shelf server platform.

7. A method according to any of claims 1 to 6, wherein the method comprises receiving (303, 401), in the first network apparatus (102) from the data collection function, the data related to the network transaction via secure file transfer protocol SFTP, file transfer protocol FTP, and/or a lower level streaming protocol such as transmission control protocol TCP.

8. A method according to any of claims 1 to 7, wherein the method comprises forwarding (304, 405) the obtained roaming data to the respective second network apparatus (105, 108) via secure file transfer protocol SFTP, file transfer protocol FTP, and/or a lower level streaming protocol such as transmission control protocol TCP.

9. A method according to any of claims 1 to 8, wherein the method comprises, regarding the identified peer network operator, securing (303, 404) the corresponding data according to policies applicable to the identified peer network operator.

10. A method for managing roaming information in a communications system, the method comprising
receiving (305, 308, 501), in a second network apparatus (105, 108) roaming data forwarded by a first network apparatus (105, 108) according to roaming data content awareness, wherein the roaming data is related to a network transaction,
wherein the network operator managing the second network apparatus (105, 108) is identified by the first network apparatus (102) as a peer network operator in the network transaction,
wherein the first network apparatus (102) is managed by a network operator different from the identified peer network operator; and
providing (306, 309, 502) the received roaming data to a customer experience management function, wherein the peer network operator relates to a home network or to a visited network.

11. An apparatus comprising at least one processor; and at least one memory including a computer program code, wherein the at least one memory and the computer program code are configured to, with the at least one processor, cause the apparatus (102, 105, 108) to perform any of the method steps of claims 1 - 10.

12. A computer program product comprising program instructions which, when run on a computing apparatus, causes the computing apparatus to perform a method according to any one of the claims 1 to 10.

## Patentansprüche

1. Verfahren zur Verwaltung von Roaminginformationen in einem Kommunikationssystem, wobei das Verfahren umfasst
Empfangen (303, 401) von Daten, die sich auf eine Netzwerktransaktion beziehen, in einer ersten Netzwerkvorrichtung (102) von einer Datenerfassungsfunktion;
Filtern (303, 402) der empfangenen Daten, um Roamingdaten zu erhalten;
bezüglich der erhaltenen Roamingdaten Identifizieren (303, 403) eines Peer-Netzwerkbetreibers in der entsprechenden Netzwerktransaktion;
Weiterleiten (304, 405) der erhaltenen Roamingdaten an eine jeweilige zweite Netzwerkvorrichtung (105, 108), die von dem identifizierten Peer-Netzwerkbetreiber verwaltet wird, wobei die erste Netzwerkvorrichtung (102) von einem Netzwerkbetreiber verwaltet wird, der sich von dem identifizierten Peer-Netzwerkbetreiber unterscheidet;
wobei das Verfahren die Verwendung von Roamingdaten-Inhaltserkenntnis umfasst, um die Roamingdaten an die an einem Roamingszenario beteiligten Netzwerkbetreiber zu leiten; und
wobei sich der Peer-Netzwerkbetreiber auf ein Heimnetzwerk oder auf ein besuchtes Netzwerk bezieht.

2. Verfahren nach Anspruch 1, wobei das Verfahren das Bereitstellen eines nahezu zeitnahen Austausches von Roamingdaten zwischen Netzwerkbetreibern umfasst.

3. Verfahren nach Anspruch 1 oder 2, wobei das Verfahren das Herausfiltern (303, 402) vertraulicher Informationen, die nicht mit dem identifizierten Peer-Netzwerkbetreiber geteilt werden sollen, vor dem Weiterleiten (304, 405) der Roamingdaten an die zweite Netzwerkvorrichtung (105, 108) umfasst.

4. Verfahren nach Anspruch 1, 2 oder 3, wobei das Verfahren das Bereitstellen einer Schnittstelle zum Verschlüsseln, Entschlüsseln, Maskieren, Filtern, Komprimieren und/oder Dekomprimieren der Roamingdaten in der ersten Netzwerkvorrichtung (102) vor dem Weiterleiten (304, 405) der Roamingdaten an die zweite Netzwerkvorrichtung (105, 108) umfasst.

5. Verfahren nach einem der Ansprüche 1 bis 4, wobei das Verfahren das gegenseitige Vereinbaren einer Reihe von Roamingmetriken zwischen Netzwerkbetreibern umfasst, die automatisch in nahezu Echtzeit verteilt werden.

6. Verfahren nach einem der Ansprüche 1 bis 5, wobei eine Roaming-Messbrokerfunktion auf einer gemeinsamen, handelsüblichen Serverplattform ausgeführt wird.

7. Verfahren nach einem der Ansprüche 1 bis 6, wobei das Verfahren das Empfangen (303, 401) der Daten, die sich auf die Netzwerktransaktion beziehen, in der ersten Netzwerkvorrichtung (102) von der Datenerfassungsfunktion über das sichere Dateiübertragungsprotokoll SFTP, das Dateiübertragungsprotokoll FTP und/oder ein Streaming-Protokoll der unteren Ebene, wie das Übertragungssteuerungsprotokoll TCP, umfasst.

8. Verfahren nach einem der Ansprüche 1 bis 7, wobei das Verfahren das Weiterleiten (304, 405) der erhaltenen Roamingdaten an die jeweilige zweite Netzwerksvorrichtung (105, 108) über ein sicheres Dateiübertragungsprotokoll SFTP, ein Dateiübertragungsprotokoll FTP und/oder ein Streaming-Protokoll auf niedrigerer Ebene wie das Übertragungssteuerungsprotokoll TCP umfasst.

9. Verfahren nach einem der Ansprüche 1 bis 8, wobei das Verfahren bezüglich des identifizierten Peer-Netzwerkbetreibers das Sichern (303, 404) der entsprechenden Daten gemäß den für den identifizierten Peer-Netzwerkbetreiber geltenden Richtlinien umfasst.

10. Verfahren zur Verwaltung von Roaminginformationen in einem Kommunikationssystem, wobei das Verfahren umfasst
Empfangen (305, 308, 501) in einer zweiten Netzwerkvorrichtung (105, 108), die von einer ersten Netzwerkvorrichtung (105, 108) gemäß der Roamingdaten-Inhaltserkenntnis weitergeleitet wird, wobei die Roamingdaten mit einer Netzwerktransaktion verbunden sind,
wobei der Netzwerkbetreiber, der die zweite Netzwerkvorrichtung (105, 108) verwaltet, durch die erste Netzwerkvorrichtung (102) als Peer-Netzwerkbetreiber in der Netzwerktransaktion identifiziert wird,
wobei die erste Netzwerkvorrichtung (102) von einem Netzwerkbetreiber verwaltet wird, der sich von dem identifizierten Peer-Netzwerkbetreiber unterscheidet; und
Bereitstellen (306, 309, 502) der empfangenen Roamingdaten an eine Kundenerlebnisverwaltungsfunktion, wobei sich der Peer-Netzwerkbetreiber auf ein Heimnetzwerk oder auf ein besuchtes Netzwerk bezieht.

11. Vorrichtung, die mindestens einen Prozessor umfasst; und mindestens einen Speicher, der einen Computerprogrammcode umfasst, wobei der mindestens eine Speicher und der Computerprogrammcode dazu ausgelegt sind, mit dem mindestens einen Prozessor die Vorrichtung (102, 105, 108) dazu zu veranlassen, einen der Verfahrensschritte der Ansprüche 1 - 10 durchzuführen.

12. Computerprogrammprodukt, umfassend Programmanweisungen, die, wenn sie auf einer Computervorrichtung ausgeführt werden, die Computervorrichtung veranlassen, ein Verfahren nach einem der Ansprüche 1 bis 10 durchzuführen.

## Revendications

1. Procédé permettant de gérer des informations d'itinérance dans un système de communication, le procédé comprenant :
la réception (303, 401), dans un premier appareil de réseau (102) à partir d'une fonction de collecte de données, de données relatives à une transaction de réseau ;
le filtrage (303, 402) des données reçues pour obtenir des données d'itinérance ;
en ce qui concerne les données d'itinérance obtenues, l'identification (303, 403) d'un opérateur de réseau pair à pair dans la transaction de réseau correspondant ;
la transmission (304, 405) des données d'itinérance obtenues à un deuxième appareil de réseau respectif (105, 108) géré par l'opérateur de réseau pair à pair identifié, le premier appareil de réseau (102) étant géré par un opérateur de réseau différent de l'opérateur de réseau pair à pair identifié ;
le procédé comprenant l'utilisation de la sensibilité au contenu de données d'itinérance pour router les données d'itinérance vers les opérateurs de réseau impliqués dans un scénario d'itinérance ; et l'opérateur de réseau pair à pair concernant un réseau nominal ou un réseau visité.

2. Procédé selon la revendication 1, dans lequel le procédé comprend la fourniture d'un échange presque temps réel de données d'itinérance entre des opérateurs de réseau.

3. Procédé selon la revendication 1 ou 2, dans lequel le procédé comprend le filtrage (303, 402) d'informations confidentielles qui ne doivent pas être partagées avec l'opérateur de réseau pair à pair identifié, avant de transmettre (304, 405) les données d'itinérance au deuxième appareil de réseau (105, 108).

4. Procédé selon la revendication 1, 2 ou 3, dans lequel le procédé comprend la fourniture, dans le premier appareil de réseau (102), d'une interface permettant de crypter, décrypter, masquer, filtrer, compresser et/ou décompresser les données d'itinérance avant de transmettre (304, 405) les données d'itinérance au deuxième appareil de réseau (105, 108).

5. Procédé selon l'une quelconque des revendications 1 à 4, dans lequel le procédé comprend l'accord mutuel, entre des opérateurs de réseau, concernant un ensemble de mesures d'itinérance devant être distribuées automatiquement en temps presque réel.

6. Procédé selon l'une quelconque des revendications 1 à 5, dans lequel une fonction de courtier de mesures d'itinérance s'exécute au-dessus d'une plateforme de serveur off-the-shelf.

7. Procédé selon l'une quelconque des revendications 1 à 6, dans lequel le procédé comprend la réception (303, 401), dans le premier appareil de réseau (102) à partir de la fonction de collecte de données, des données relatives à la transaction de réseau par le biais du protocole de transfert de fichier sécurisé SFTP, du protocole de transfert de fichier FTP, et/ou d'un protocole de diffusion continue de niveau inférieur tel que le protocole de contrôle de transmission TCP.

8. Procédé selon l'une quelconque des revendications 1 à 7, dans lequel le procédé comprend la transmission (304, 405) des données d'itinérance obtenues au deuxième appareil de réseau respectif (105, 108) par le biais du protocole de transfert de fichier sécurisé SFTP, du protocole de transfert de fichier FTP, et/ou d'un protocole de diffusion continue de niveau inférieur tel que le protocole de contrôle de transmission TCP.

9. Procédé selon l'une quelconque des revendications 1 à 8, dans lequel le procédé comprend, en ce qui concerne l'opérateur de réseau pair à pair identifié, la sécurisation (303, 404) des données correspondantes selon des politiques applicables à l'opérateur de réseau pair à pair identifié.

10. Procédé permettant de gérer des informations d'itinérance dans un système de communication, le procédé comprenant :
la réception (305, 308, 501), dans un deuxième appareil de réseau (105, 108) de données d'itinérance transmises par un premier appareil de réseau (105, 108) selon une sensibilité au contenu de données d'itinérance, les données d'itinérance concernant une transaction de réseau,
l'opérateur de réseau gérant le deuxième appareil de réseau (105, 108) étant identifié par le premier appareil de réseau (102) comme un opérateur de réseau pair à pair dans la transaction de réseau,
le premier appareil de réseau (102) étant géré par un opérateur de réseau différent de l'opérateur de réseau pair à pair identifié ; et
la fourniture (306, 309, 502) des données d'itinérance reçues à une fonction de gestion de l'expérience utilisateur, l'opérateur de réseau pair à pair concernant un réseau nominal ou un réseau visité.

11. Appareil comprenant au moins un processeur ; et au moins une mémoire comportant un code de programme informatique, ladite mémoire et le code de programme informatique étant configurés pour, avec ledit processeur, amener l'appareil (102, 105, 108) à mettre en œuvre l'une quelconque des étapes de procédé des revendications 1-10.

12. Produit programme d'ordinateur comprenant des instructions de programme qui, lorsqu'elles sont exécutées sur un appareil informatique, amènent l'appareil informatique à mettre en œuvre un procédé selon l'une quelconque des revendications 1 à 10.
